**Europäisches Patentamt**

**European Patent Office**

**Office européen des brevets**

(11) Numéro de publication : **0 465 327 A2**

# (12) DEMANDE DE BREVET EUROPEEN

(21) Numéro de dépôt : **91401779.3**

(51) Int. Cl.⁵ : **A01G 13/02, B65G 47/14**

(22) Date de dépôt : **28.06.91**

(30) Priorité : **29.06.90 FR 9008428**

(43) Date de publication de la demande :
**08.01.92 Bulletin 92/02**

(84) Etats contractants désignés :
**BE DE ES FR IT**

(71) Demandeur : **Audineau, Thierry**
**La Maraichine**
**F-85770 Vix (FR)**
Demandeur : **ETABLISSEMENTS RABAUD**
**Société Anonyme**
**Bellevue**
**F-85110 Sainte-Cécile (FR)**

(72) Inventeur : **Audineau, Thierry**
**La Maraichine**
**F-85770 Vix (FR)**
Inventeur : **Rabaud, Claude**
**Bellevue**
**F-85110 Sainte-Cecile (FR)**

(74) Mandataire : **Phélip, Bruno et al**
**c/o Cabinet Harlé & Phélip 21, rue de La**
**Rochefoucauld**
**F-75009 Paris (FR)**

(54) **Dispositif pour la formation de tunnels de culture.**

(57) L'invention concerne notamment un dispositif d'implantation d'arceaux pour la formation de tunnels de culture, qui utilise des tige rectilignes (3) disposées dans un magasin et permet de conformer ces tiges en forme d'arceaux avant de les planter dans le sol.

Le dispositif comprend un magasin (11) de stockage des tiges (3), des moyens (12) de prélèvement de ces tiges, une par une, dans le magasin ; des moyens (13) de prise en charge de la tige qui a été extraite du magasin et de cintrage de cette tige en forme d'arceau ; des moyens (14) de plantation de l'arceau dans le sol.

L'invention concerne également une machine qui comporte ce dispositif et au moins un des éléments suivants : - un rouleau (15) de matériau genre film plastique transparent (4) servant à couvrir les arceaux, - un rouleau (7) d'un film plastique (2) servant au paillage, - un ensemble (9) de plantation de plants (1) disposé entre le dispositif de mise en place d'arceaux et le rouleau (7) de paillage.

EP 0 465 327 A2

_fig. 2_

La présente invention concerne un procédé et des moyens pour la formation de tunnels de culture. Elle concerne plus précisément : - un dispositif d'implantation d'arceaux servant à la mise en forme des tunnels de culture, - un magasin de tiges destinées à être mises en forme d'arceaux, - une machine comportant notamment un tel dispositif, et - le tunnel de culture obtenu par ladite machine.

De nombreuses cultures sont réalisées sous des abris-tunnels. Ces abris sont constitués d'arceaux et, selon le cas, d'un matériau du genre film plastique transparent ou filet de protection, tendu en longueur sur les arceaux, formant une voûte au-dessus des plantations. Les arceaux sont généralement réalisés en fil métallique et leur mise en place peut s'effectuer au moyen de machines comme décrit par exemple dans le document FR-A-2 565 774. Cette machine à planter les arceaux comprend un magasin d'arceaux préformés à partir duquel un opérateur alimente un dispositif de convoyage et de mise en terre. Ce dispositif comprend des chaînes de convoyage qui sont munies de pinces servant à agripper les bords latéraux de chaque arceau. Le mouvement de ces pinces est un mouvement vertical par rapport au sol de façon à enfoncer les arceaux au fur et à mesure de l'avancement de la machine.

Une telle machine nécessite la présence d'un opérateur pour saisir les arceaux préalablement cintrés, dans le magasin, et les positionner un par un dans les pinces de mise en terre. Ces arceaux en forme d'arc de cercle, sont d'un maniement et d'un stockage difficiles.

Par ailleurs, une telle machine ne peut planter que des arceaux ayant toujours les mêmes dimensions.

Il existe également des machines de mise en place d'arceaux qui réalisent automatiquement le cintrage de tiges métalliques rectilignes. Une telle machine est notamment décrite dans le document FR-A-2 389 319. Chaque tige est prélevée à la partie inférieure du magasin et elle est cintrée en forme d'arceau puis plantée dans le sol, au fur et à mesure de l'avancement de la machine, au moyen de courroies sans fin, comme dans le document précité.

Ces machines réalisent une mise en place des arceaux, de façon continue.

D'autres machines, décrites dans les documents US-A-4 658 538 et 4 800 673, concernent des machines semi-automatiques d'implantation d'arceaux à partir de tiges rectilignes qui sont mises en place manuellement dans les mécanismes d'implantation.

On remarque que toutes ces machines présentent un encombrement relativement important, dans le sens longitudinal. Pour certaines d'entre elles, la présence d'un opérateur accroît de façon notable le prix de revient de la mise en place des arceaux.

La présente invention permet de remédier à ces inconvénients, elle propose notamment un dispositif d'implantation totalement automatique des arceaux. Ce dispositif présente par ailleurs l'avantage d'être relativement peu encombrant et de pouvoir s'intégrer dans une machine qui réalise d'une façon globale la mise en place des plantes, du tunnel et du paillage selon le cas.

La présente invention propose également un perfectionnement au magasin de distribution de tiges rectilignes. Ce magasin, comme représenté dans le document FR-A-2 389 319 comporte une zone de stockage et une zone dans laquelle les tiges sont toutes disposées selon un même plan, laquelle zone s'apparente à une goulotte verticale. Pour éviter des interventions trop fréquentes de l'opérateur chargé de conduire la machine, la présente invention propose des moyens qui permettent d'améliorer le passage des tiges depuis la zone de stockage dans la goulotte.

Le dispositif d'implantation d'arceaux, selon l'invention, pour la réalisation de tunnels de culture, comprend :

    – un magasin de stockage et de distribution de tiges allongées rectilignes, lequel magasin est muni d'une goulotte sensiblement verticale dans laquelle les tiges sont disposées horizontalement et perpendiculaires au sens d'avancement ;

    – des moyens de prélèvement des tiges, une par une, à la partie inférieure de la goulotte ;

    – des moyens de prise en charge de la tige préalablement prélevée, et de cintrage de ladite tige pour la mettre en forme d'arceaux ;

    – des moyens de plantation dudit arceau dans le sol ; ce dispositif comporte un berceau d'accueil et de plantation de l'arceau préformé, lequel berceau est mobile dans un plan sensiblement vertical, selon un mouvement rapide de va et vient, sous l'effet d'organes de manoeuvre commandés de façon séquentielle.

Selon une disposition préférentielle de l'invention, les moyens de prélèvement des tiges à l'extrémité inférieure de la goulotte, sont constitués de deux tiroirs disposés latéralement, mobiles longitudinalement selon un mouvement de va et vient entre la goulotte et les moyens de prise en charge et de cintrage.

Selon une disposition préférentielle de l'invention, les moyens de prise en charge et de cintrage de la tige préalablement prélevée, sont constitués de deux têtes dont chacune est montée pivotante autour d'un axe longitudinal disposé à l'extrémité du berceau d'accueil de l'arceau, lesquelles têtes basculent d'une position sensiblement verticale dans laquelle elles prennent en charge une tige proposée par les tiroirs, à une position sensiblement horizontale, dans laquelle elles maintiennent ladite tige conformée en forme d'arceau, cette mise en forme s'effectuant automatiquement lors du passage d'une position à l'autre, sous l'effet de vérins interposés entre lesdites têtes et ledit berceau.

Toujours selon l'invention, chaque tête comporte un crochet qui est mobile autour d'un axe, lequel crochet est animé d'un mouvement de forte amplitude au moyen d'une lumière aménagée dans son corps pour pouvoir s'escamoter, en position inactive, au-dessus de la tige présentée par les tiroirs, et pour pouvoir, lors de son mouvement de retour vers la position active, agripper ladite tige dans un premier temps, puis la sortir des tiroirs et enfin la verrouiller avant son cintrage.

Toujours selon l'invention et selon une autre disposition préférentielle, les têtes sont aménagées de façon à réaliser un précambrage de la tige dès son prélèvement dans les tiroirs et avant son cintrage final.

L'ensemble des mouvements est réalisé au moyen de vérins pneumatiques ou hydrauliques, commandés à partir d'un automate qui déclenche chacune des séquences en fonction de l'avancement du dispositif sur le sol.

Pour améliorer la distribution des tiges entre le magasin et la goulotte, ce dernier comporte, séparant la zone de stockage et la goulotte, des moyens automatiques d'extraction des tiges une à une de la zone de stockage pour les disposer dans la goulotte de distribution, lesquels moyens se situent sensiblement au centre du magasin pour saisir les tiges en leur milieu, lesquelles tiges sont directement en appui sur ces moyens d'extraction.

Selon une disposition préférentielle de l'invention, les moyens d'extraction sont constitués d'un secteur circulaire pivotant autour d'un axe transversal parallèle aux tiges situées dans la goulotte, lequel secteur circulaire comporte sur sa bordure périphérique, un cran destiné à accueillir une tige, par gravité, ce secteur est animé d'un mouvement de va et vient entre la zone de stockage où il prend en charge une tige et la goulotte où il est déchargé de ladite tige au moyen d'un système d'éjection.

Toujours selon l'invention, la distance qui sépare la zone de stockage de la zone où s'effectue l'éjection de la tige, est aménagée pour permettre à la tige, par simple élasticité, de s'extraire du paquet de tiges positionnées dans la zone de stockage.

L'invention concerne encore la machine qui comporte un tel dispositif d'implantation d'arceaux, et en particulier la machine équipée d'au moins un des éléments suivants :
   – un rouleau de matériau destiné à couvrir les arceaux, et les moyens de déroulement et de mise en place dudit matériau, l'ensemble étant positionné en aval c'est-à-dire derrière le dispositif de plantation d'arceaux ;
   – un rouleau de film plastique, généralement opaque, servant à réaliser un paillage, disposé en amont du dispositif d'implantation d'arceaux, et les moyens d'application sur le sol de ce film plastique ;
   – une installation de plantation des plants de culture, positionnés en amont du dispositif d'implantation d'arceaux et derrière le rouleau de plastique du paillage.

Le tunnel de culture selon l'invention, obtenu au moyen de la machine équipée d'un rouleau de plastique de paillage, d'un ensemble de plantation, d'un dispositif d'implantation d'arceaux et d'un rouleau de matériau couvrant lesdits arceaux, comporte :
   – un paillage étendu sur le sol, recevant les plants dans sa partie centrale ;
   – des arceaux plantés en voisinage des bordures du paillage, à travers ce dernier ;
   – un film élastique ou filet mis en forme par les arceaux et maintenu en place au moyen de ses bordures, lesquelles bordures reposent directement sur les bordures du paillage et sont recouvertes de terre.

Les tunnels de culture obtenus par la mise en oeuvre de l'ensemble des moyens de l'invention présentent l'avantage de ne pas renfermer de terre et d'offrir une plus grande superficie propre pour le développement des cultures.

L'invention sera encore illustrée à l'aide de la description suivante et des dessins annexés, donnés à titre indicatif, et dans lesquels :
   – la figure 1 est une vue en perspective d'un tunnel de culture obtenu par les moyens de l'invention ;
   – la figure 2 est une vue schématique illustrant la disposition des éléments d'une machine selon l'invention en vue de la réalisation d'un tunnel tel que représenté figure 1 ;
   – la figure 3 est une vue schématique, de côté, en coupe partielle, du dispositif d'implantation des arceaux ;
   – la figure 4 est une vue depuis l'arrière de la machine, du dispositif d'implantation des arceaux, avec les pinces et l'arceau dans deux positions ;
   – la figure 5 représente, de façon schématique, en coupe longitudinale, un magasin muni d'un dispositif d'extraction des tiges, en vue de remplir la goulotte de distribution ;
   – la figure 6 est une vue partielle dans un plan transversal, montrant le magasin ;
   – la figure 7 représente, de façon agrandie, les moyens d'extraction automatique des tiges de la zone de stockage du magasin pour les disposer dans la goulotte de distribtuion.

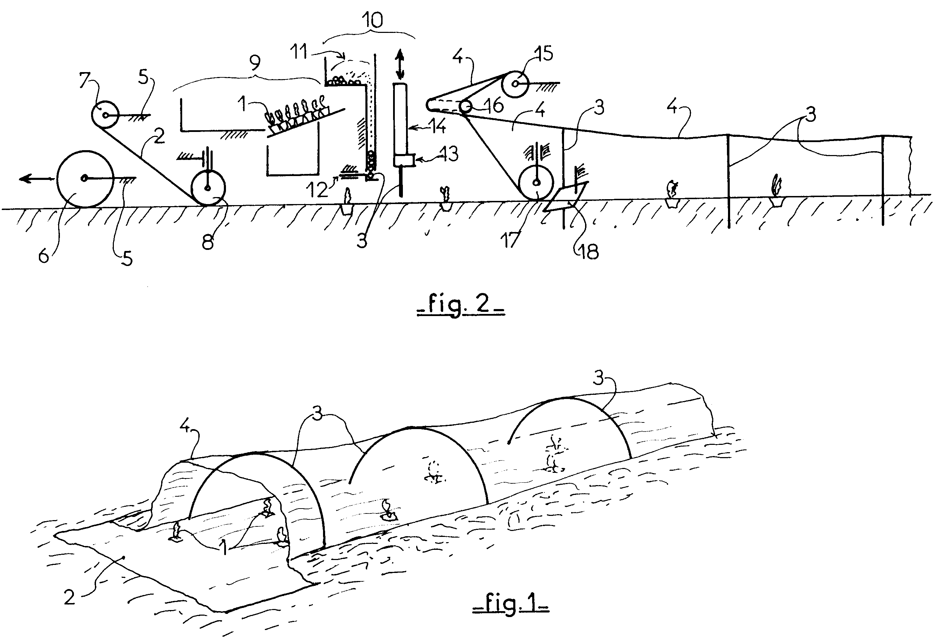

On a représenté, figure 1, une portion d'un tunnel de culture. Ce genre de tunnel peut s'étendre sur plusieurs centaines de mètres. Il sert de protection à de jeunes plants 1 disposés régulièrement sur une bande de terre qui peut, comme représenté figure 1, être recouverte d'un paillage 2 constitué d'un film plastique étendu sur le sol avant la mise en place des jeunes plants. Le tunnel proprement dit est formé au moyen d'arceaux 3 plantés verticalement et transversalement par rapport à la bande de terre cultivée ou au paillage 2. Ces arceaux servent de support et de moyen de mise en forme d'un film plastique transparent 4 ou d'un filet de protection, dont les bordures latérales, qui s'étendent au-delà des arceaux 3, sont recouvertes de terre en même temps que les bordures latérales du paillage 2. On obtient ainsi un tunnel de culture très propre, sans terre à l'intérieur. La surface offerte aux jeunes plants est maximale.

On a représenté, figure 2, sous forme de schéma fonctionnel, l'ensemble des moyens qui permet de réaliser à partir d'une machine, un tunnel de culture tel que présenté figure 1.

Cette machine, automotrice ou tractée, comprend un châssis 5 qui comporte, à l'avant, des roues 6, motrices ou non, disposées de part et d'autre du plan longitudinal médian de la machine. Ces roues 6 peuvent servir au contrôle de l'avancement de la machine et au déclenchement d'opérations de plantage des plants 1 et/ou des arceaux 3 selon un intervalle pré-établi, en liaison avec un automate, non représenté.

Ce châssis 5 supporte, toujours vers l'avant, un rouleau 7 constitué du film plastique de paillage 2 ; les bordures de ce film plastique 2 sont plaquées au sol au moyen de roues latérales 8 qui sont disposées derrière les roues principales 6.

Derrière le rouleau de paillage 6 on remarque le poste de plantation 9 au niveau duquel un opérateur ou des mécanismes saisissent les plants 1 pour les mettre en terre de façon régulière sur un ou plusieurs rangs longitudinaux.

Derrière le poste de plantation, on trouve le dispositif d'implantation des arceaux dans le sol. Ce dispositif est principalement constitué d'un magasin 11 dans lequel sont stockées et réparties, des tiges rectilignes qui deviendront ensuite les arceaux 3. Le repère de ces tiges sera le même que pour les arceaux dans la suite du texte. Ce dispositif comprend également des moyens 12 de prélèvement des tiges 3 dans le magasin, des moyens 13 de prise en charge et de cintrage de la tige 3, et des moyens 14 animés d'un mouvement vertical, pour permettre la mise en terre de l'arceau 3 ainsi formé dans le dispositif.

Derrière le dispositif de mise en terre des arceaux 3, on trouve un rouleau 15 constitué par le film plastique transparent 4 qui recouvre les arceaux 3 disposés au-dessus des plants 1. Le film plastique 4 est mis en forme au moyen d'un guide 16 positionné entre le rouleau 15 et le dispositif 10. Ce guide 16 se présente sous la forme d'une barre cylindrique conformée en arc de cercle, vers l'avant, positionnée dans un plan sensiblement horizontal à mi-hauteur entre le rouleau 15 et le niveau supérieur du tunnel. Des roues latérales 17, dont l'écartement est supérieur à la largeur du tunnel, pressent les bordures du film plastique 4 sur le film plastique 2 et sur le sol, et des socs 18 disposés juste en arrière de ces roues 17, projettent de la terre sur lesdites bordures du film plastique 4 pour le maintenir en place de chaque côté du tunnel, et maintenir en même temps les bordures du film plastique 2 de paillage. Il faut noter que le paillage est préalablement fixé en terre par l'arceau planté dans le sol.

La machine schématisée figure 2, réalise en une seule passe un tunnel de culture.

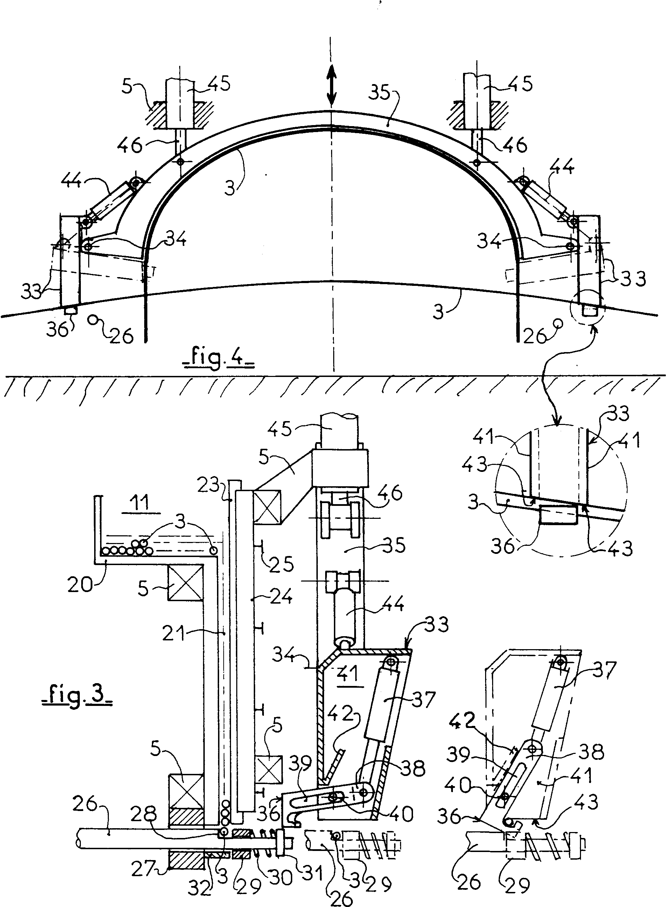

On a représenté, figure 3, le dispositif 10 servant à l'implantation des arceaux 3 dans le sol.

Ce dispositif est constitué d'un magasin 11 dans lequel sont stockées des tiges métalliques rectilignes 3 qui serviront à former les arceaux. Ce magasin 11 est constitué d'un support 20 sur lequel sont réunis un nombre important de tiges 3. Ce support 20 est surélevé par rapport à une goulotte verticale 21 dans laquelle les tiges 3 sont empilées les unes sur les autres. Cette goulotte 21 permet le positionnement des tiges 3 horizontalement, dans un plan vertical, perpendiculaires au sens d'avancement de la machine. Cette goulotte 21 est délimitée par des guides verticaux 22 et 23. Le guide 22 est solidaire du châssis 5 de la machine. Le guide 23 est de préférence logé dans un support 24 qui est solidaire du châssis 5 de la machine. Le support 24 est équipé de vis 25 qui permettent de régler à volonté la position du guide 23 pour ajuster l'écart entre ce dernier et le guide 22 en fonction du diamètre des tiges 3.

Les tiges 3 sont guidées au moyen de deux goulottes 21 disposées latéralement, de part et d'autre du tunnel. Ces goulottes 21 sont en fait disposées à l'aplomb des moyens de prélèvement 12 des tiges 3. Ces moyens de prélèvement des tiges 3 sont constitués d'un tiroir 26 qui obture l'extrémité inférieure de la goulotte 21. Ce tiroir 26 est mobile longitudinalement, c'est-à-dire selon le sens d'avancement de la machine. Il est guidé au moins dans une bague 27 solidaire du châssis 5 de la machine. Ce tiroir 26 est animé, par des moyens appropriés, du genre vérins, non représentés, d'un mouvement longitudinal entre une position de repos où il reçoit la tige 3 positionnée à la partie inférieure de la goulotte 21, et une position de présentation de cette tige 3 aux moyens 13 de prise en charge de ladite tige.

Ce tiroir 26 comporte une entaille 28 de réception de la tige inférieure 3 de la goulotte. La hauteur de cette entaille 28 correspond sensiblement au diamètre de la tige 3. L'extrémité du tiroir 26 est aménagée de façon à recevoir, en coulissement, une bague 29 soumise en permanence à l'action d'un ressort 30 qui est en appui sur une collerette 31 solidaire de l'extrémité du tiroir 26. La bague coulissante 29 à pour but de presser la tige 3 dans l'angle de l'entaille 28 du tiroir 26 pour la maintenir sur le tiroir pendant son transfert entre la position de départ et la position de prise en charge par les moyens 13. Le ressort 30 peut aussi être aménagé pour appuyer directement sur la tige 3, en lieu et place de la bague 29.

Le poids des tiges 3 dans la goulotte 21 permet de positionner la tige inférieure dans chaque entaille des tiroirs disposés sous les goulottes. Cependant, les tiges 3 ne sont pas toujours rigoureusement rectilignes et elles peuvent, lorsque le tiroir 26 se déplace, quitter l'entaille 28. Grâce à la bague 29, on réalise à l'extrémité du tiroir 26 un véritable étau qui empêche tout mouvement intempestif de la tige 3 et en particulier son échappement de l'entaille 28. Pour pouvoir accueillir la tige inférieure 3 de la goulotte 21, lorsque le tiroir 26 est au repos, la bague coulissante 29 est maintenue écartée au moyen d'une butée 32 solidaire de la bague 27. L'entaille 28 est alors suffisamment grande pour accueillir une tige 3. Lorsque le tiroir est pour amener la tige 3 face aux moyens 13 de prise en charge, la bague 29, sous l'effet du ressort 30, presse immédiatement la tige 3 dans l'angle de l'entaille 28.

La butée 32 peut comporter des moyens de réglage pour ajuster à volonté la position de la bague 29. La pression du ressort 30 sur cette bague 29 peut également être réglable par déplacement de la collerette 31.

Les moyens 13 de prise en charge de la tige 3 et de cintrage de cette tige sont constitués de deux têtes pivotantes 33 articulées autour d'axes longitudinaux 34 sur une structure en forme d'arc de cercle ouvert vers le sol et servant de berceau 35 aux tiges 3 lorsqu'elles sont cintrées ; ce berceau fait partie des moyens 14 de plantation des arceaux 3. On a représenté, figures 3 et 4, les têtes 33 solidaires du berceau 35. Ces têtes 33 sont disposées latéralement, à chaque extrémité du berceau 35. Elles sont articulées autour de l'axe 34 pour passer d'une position de prise en charge de la tige 3 qui est présentée par les tiroirs 26, à une position de mise en forme d'arceau de la tige 3, dans le berceau 35, laquelle position est maintenue jusqu'à la plantation dudit arceau 3 dans la terre. On a représenté, figure 4, les tiroirs 26 disposés latéralement, sensiblement à l'aplomb des axes longitudinaux 34, sous la tige 3 qui vient d'être prise en charge par les têtes 33. Les tiroirs 26 se situent sensiblement à l'aplomb des goulottes 21 représentées figure 3.

Chaque tête 33 renferme un crochet 36 dont l'ouverture est orientée vers l'arrière de la machine. Ce crochet 36 est mobile sous l'action d'un vérin 37. On a représenté, figure 3, le crochet 36 dans une position escamotée, c'est-à-dire avant la prise en charge de la tige 3 et, en traits mixtes fins, dans une position active de prise en charge de ladite tige 3. Ce crochet 36 comprend un corps 38 allongé muni d'une lumière 39. Ce crochet 36 est guidé sur un axe 40 qui s'inscrit dans la lumière 39. Cet axe 40 se situe à l'extrémité de la tête 33 entre deux flasques latéraux 41 constituant ladite tête et qui enserrent le crochet 36 et le vérin 37. L'axe 40 est sensiblement parallèle aux tiges 3 positionnées dans la goulotte 2 lorsque le crochet 36 est en position inactive comme représenté figure 3.

Grâce à sa lumière 39, le crochet 36 a un mouvement d'amplitude importante qui lui permet de saisir la tige 3 en la tirant vers le haut après l'avoir dégagée de l'entaille 28 du tiroir 26. Le basculement du crochet 36 autour de l'axe 40 est limité par une butée 42 solidaire des flancs 41 constituant la tête 33.

Les bords inférieurs 43 des flancs 41 sont parallèles au sens d'avancement de la machine et ils sont légèrement décalés l'un par rapport à l'autre. Ces bords 43 se situent à des niveaux différents, de façon à donner à la tige 3, comme il apparaît figure 4, un précambrage lorsque les crochets 36 sont rétractés en position active au moyen des vérins 37. Ce précambrage de la tige 3 permet sa mise en forme d'arceaux d'une manière plus aisée et plus sûre, avec moins de puissance.

Les têtes 33 sont animées d'un mouvement de pivotement autour des axes 34 au moyen de vérins 44, pour les faire passer ensemble, d'une position de prise en charge de la tige 3 lorsqu'elle est présentée par les tiroirs 26, à une position de mise en forme de l'arceau, laquelle position sera conservée jusqu'à la mise en terre des extrémités dudit arceau. Chaque vérin 44 est monté sur le berceau 35 et sur l'extrémité latérale de chaque tête 33.

Le berceau 35 en forme d'arceau, est mobile dans un plan transversal, sensiblement vertical, au moyen de deux vérins 45 dont les corps sont solidaires du bâti 5 de la machine. Ce berceau 35 est animé d'un mouvement vertical rapide de va et vient, soutenu par les tiges 46 des vérins 45.

L'intervalle de plantation des arceaux 3 est commandé au moyen de l'une des roues principales 6 de la machine. La gestion des différents mouvements du dispositif de plantation peut être assurée par un automate qui commande de façon séquentielle l'ensemble des vérins. Ces vérins peuvent être du type hydraulique ou pneumatique.

La mise en terre des arceaux au moyen du dispositif représenté figures 3 et 4, s'effectue grâce à un enchaînement d'opérations. En préalable, un opérateur dispose les tiges 3 dans le magasin 11 et en particulier dans la goulotte 21 remplie de tiges 3. Au fur et à mesure de l'avance de la machine, la roue 6 donne, selon les besoins, des impulsions qui permettent, par exemple, de commander le mouvement du tiroir 26. Ce tiroir 26 prélève une à une, les tiges 3 disposées dans la goulotte 21 pour les amener sous les têtes 33. Le cycle de mise en place des arceaux se décompose de la façon suivante. Après mise en terre d'un premier arceau, les crochets 36 des têtes 33 libèrent les bords verticaux de l'arceau et le berceau 35 est relevé jusqu'à sa position la plus haute au moyen des vérins 45. Dans le même temps, les têtes 33 sont basculées et mises en position sensiblement verticale au moyen des vérins 44. Dès que le berceau 35 est en position repos, c'est-à-dire en position relevée, et que les têtes 33 et les crochets 36 sont en position pour accueillir une tige 3, le tiroir 26 déplace une tige 3 pour l'amener de sa position de départ sous la goulotte 21, jusqu'à une position de fin de course des tiroirs, sous les têtes 33. Dans cette position, les vérins 37 d'animation des crochets 36 entrent en action pour que ces crochets prennent en charge la tige 3 qui est présentée par les tiroirs 26. Dès que cette tige 3 est emprisonnée au niveau de chaque tête, par les crochets 36, et en même temps précambrée dans le sens de l'arceau, les tiroirs 26 se rétractent jusqu'à leur position repos où une nouvelle tige 3 tombe dans l'entaille 28 de chacun desdits tiroirs 26. Les tiroirs 26 étant rétractés, les têtes 33 basculent sensiblement à l'horizontale sous l'effet des vérins 44 et simultanément, façonnent la tige 3 en forme d'arceau. Cette position des têtes 33 et des crochets 36 est maintenue pendant le mouvement de descente de la structure 35 jusqu'à la mise en terre de l'arceau 3. Dès que l'arceau est planté en terre, poussé par le berceau 35, les crochets 36 libèrent l'arceau 3 au moyen des vérins 37 et la structure 35 remonte jusqu'à sa position repos.

Le mouvement de plantation des arceaux est, de préférence, un mouvement très rapide de sorte qu'il n'est pas nécessaire de réaliser des aménagements complexes comme par exemple un mouvement purement vertical par rapport au sol des moyens de plantation 14 des arceaux ; cette vitesse rapide de plantation rend parfaitement négligeable l'avance de la machine et son influence sur le positionnement de l'arceau.

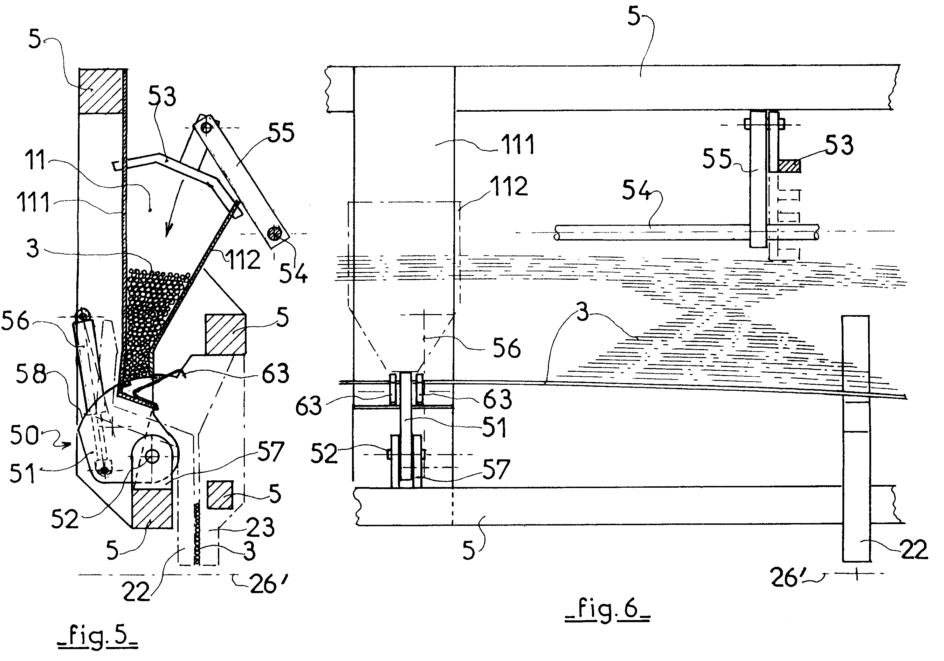

On a représenté, figures 5 et 6, un aménagemenet du magasin 11 pour obtenir avec une plus grande sécurité un remplissage automatique de la goulotte 21. Ce magasin 11 contient une multitude de tiges 3 disposées par un opérateur. Ces tiges sont maintenues entre des parois 111 et 112 qui délimitent verticalement dans sa zone centrale, le magasin. Les tiges 3 sont retenues à la partie inférieure du magasin 11, au moyen du dispositif extracteur 50 constitué d'un secteur circulaire 51 articulé autour d'un axe 52 sensiblement horizontal et parallèle aux tiges 3 positionnées dans le magasin 11. Les tiges 3 sont en appui sur le secteur circulaire 51 et en particulier sur sa bordure périphérique. Ce dispositif d'extraction 51 est disposé au centre du magasin, c'est-à-dire au milieu des tiges 3. On remarque, figure 6, que les tiges 3 sont en appui sur le secteur circulaire 51 et qu'elles sont légèrement arquées du fait du poids de l'ensemble.

Pour éviter un balancement du paquet de tiges 3 dans le magasin 11, des pattes 53 escamotables, prennent appui sur la partie supérieure du paquet de tiges 3, à proximité de l'extrémité de ces tiges.

Les pattes latérales 53 sont reliées entre elles au moyen d'un axe transversal 54, par l'intermédiaire de bras 55. On obtient ainsi une position identique des pattes 53 à chaque extrémité du paquet de tiges 3 ce qui permet de maintenir le paquet dans une position convenable dans le magasin 11.

L'extracteur 50 sépare la zone de stockage de la zone située au-dessus de la goulotte 21. Le passage du magasin 11 à la goulotte 21 s'effectue au moyen du secteur circulaire 51 animé d'un mouvement de va et vient par le biais d'un vérin 56.

La goulotte 21 est délimitée par les guides 22 et 23 représentés en traits mixtes fins pour ne pas surcharger la figure. Le guide 22 apparaît égalemnt figure 6.

On remarque, sous la goulotte 21, l'axe 26' qui correspond au tiroir 26.

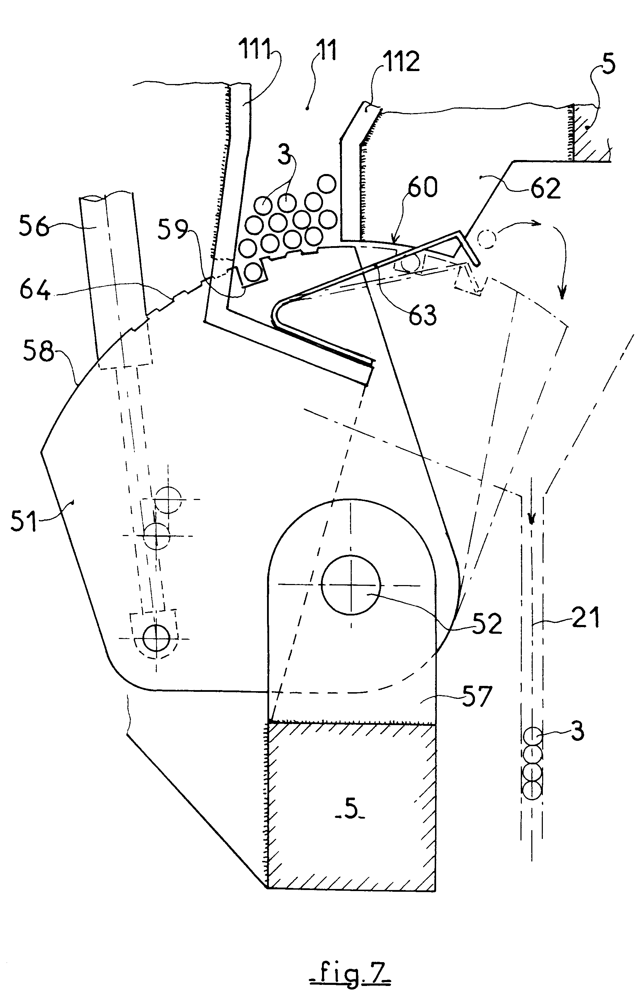

Les moyens d'extraction sont représentés plus en détail figure 7, par une vue agrandie.

On remarque les tiges 3 à la partie inférieure du magasin 11. Ces tiges sont positionnées au-dessus du secteur circulaire 51. Ce secteur circulaire 51 est articulé autour de l'axe 52, dans une chape 57 solidaire du bâti 5. La bordure périphérique supérieure 58 du secteur circulaire 51 est en contact avec les tiges 3. Elle comporte un cran 59 dont les dimensions sont adaptées au diamètre des tiges 3. On remarque la position du cran 59 à proximité de la paroi 111 du magasin 11, lorsque le secteur 51 est positionné, comme représenté en traits forts figure 7, dans sa position de chargement d'une tige 3. Le déchargement du cran 59 s'effectue par pivotement du secteur 51 autour de son axe 52 au moyen du vérin 56. On a représenté le secteur 51 dans deux positions, en traits mixtes fins. On remarque que la tige 3 est maintenue dans le cran 59 au moyen d'une paroi 60 aménagée entre le magasin 11 et la zone aménagée au-dessus de la goulotte 21. Cette paroi circulaire 60 débute à la partie inférieure de la cloison 112 et se prolonge sur le contrefort 62 qui relie ladite cloison 112 au bâti 5. On remarque que la longueur de la paroi circulaire 60 correspond sensiblement à la largeur de la partie inférieure du magasin 11.

La tige 3 est éjectée du cran 59 lorsqu'elle arrive dans la zone située au-dessus de la goulotte 21. L'éjection de la tige 3 s'effectue au moyen d'organes élastiques en forme de lames de ressort 63 disposées de part et d'autre du secteur 51. Ces lames de ressort 63 sont fixées sur un prolongement inférieur de la cloison 111. On remarque, figure 7, que ces lames élastiques 63 entrent en action pour éjecter la tige 3 positionnée dans le cran 59, lorsque cette tige 3 est déjà bien engagée dans le secteur de la cloison 60.

La distance qui sépare la partie inférieure du magasin 11 de l'endroit où s'effectue l'éjection de la tige 3 dans la zone située au-dessus de la goulotte 21, est telle qu'elle permet aux tiges 3 de s'extraire du paquet de tiges retenues dans le magasin 11 par simple élasticité. Cette distance est de l'ordre de 10 cm.

Les tiges 3 se positionnent dans le cran 59 par simple gravité. Pour favoriser le mouvement des tiges 3 et permettre le remplissage du cran 59, la bordure périphérique 58 du secteur 51 comporte un léger crénelage 64 de part et d'autre du cran 59. Ce crénelage 64 réalise une agitation du paquet de tiges 3 et facilite l'introduction de l'une des tiges dans le cran 59. Le mouvement du secteur 51 est associé à la cadence de plantation. Il peut également être commandé indépendamment pour réaliser par exemple un pré-remplissage de la goulotte lorsque l'on démarre l'opération de pose des arceaux.

Les signes de référence insérés après les caractéristiques techniques mentionnées dans les revendications ont pour seul but de faciliter la compréhension de ces dernières et n'en limitent aucunement la portée.

## Revendications

**1.-** Dispositif d'implantation automatique d'arceaux dans le sol pour la formation de tunnels de culture, monté sur une machine qui avance sur le sol, du type comprenant :

– un magasin (11) de stockage et de distribution de tiges (3) rectilignes, lequel magasin est muni d'une goulotte (21) dans laquelle les tiges sont disposées horizontalement, perpendiculaires au sens d'avancement de la machine ;

– des moyens (12) de prélèvement des tiges (3), une par une, à la partie inférieure de la goulotte (21) ;

– des moyens (13) de prise en charge de la tige (3) préalablement prélevée et de cintrage de ladite tige pour la mettre en forme d'arceau ;

– des moyens (14) de plantation dudit arceau dans le sol, caractérisé en ce qu'il comporte un berceau (35) d'accueil et de plantation de l'arceau préformé, lequel berceau est mobile dans un plan sensiblement vertical, selon un mouvement de va et vient sous l'effet d'organes de manoeuvre commandés de façon séquentielle.

**2.-** Dispositif d'implantation automatique d'arceaux selon la revendication 1, caractérisé en ce que les moyens de prélèvement des tiges à l'extrémité inférieure de la goulotte (21), sont constitués de deux tiroirs (26) disposés latéralement, mobiles longitudinalement entre une position de prise en charge d'une tige (3) sous la goulotte (21) et une position dans laquelle ladite tige est prise en charge par les moyens de cintrage, chaque tiroir comportant à son extrémité une sorte d'étau maintenant la tige pendant son transfert entre les deux positions.

**3.-** Dispositif d'implantation automatique d'arceaux selon la revendication 1, caractérisé en ce que les moyens de prise en charge et de cintrage de la tige préalablement prélevée, sont constitués de deux têtes (33), chaque tête étant montée pivotante autour d'un axe longitudinal (34) disposé à chaque extrémité d'un berceau (35) en forme d'arceau orienté vers le sol, lesquelles têtes basculent d'une position sensiblement verticale dans laquelle elles prennent en charge ladite tige (3), à une position sensiblement horizontale dans laquelle elles maintiennent ladite tige conformée en forme d'arceau, cette mise en forme s'effectuant automatiquement lors du passage d'une position à l'autre, sous l'effet de vérins (44) interposés entre lesdites têtes (33) et ledit berceau (35).

**4.-** Dispositif d'implantation automatique d'arceaux selon la revendication 3, caractérisé en ce que chaque tête (33) comporte un crochet (36) qui est mobile autour d'un axe fixe (40) sous l'effet d'un vérin (37), lequel crochet (36) est animé d'un mouvement de forte amplitude par le biais d'une lumière (39) aménagée dans son corps allongé (38) et d'un vérin (44) pour pouvoir s'escamoter en position inactive, audessus de la tige (3) qui est présentée par les tiroirs (26), et pour pouvoir, lors de son mouvement de retour vers la position active, agripper ladite tige (3) dans un premier temps, puis la sortir des tiroirs (26) et enfin verrouiller ladite tige (3) avant son cintrage.

**5.-** Dispositif d'implantation automatique d'arceaux selon l'une quelconque des revendications 3 ou 4, caractérisé en ce que chaque tête (33) est constituée de deux flasques latéraux (41) dont les bordures inférieures (43) sont parallèles au sens d'avancement de la machine et sont décalées l'une par rapport à l'autre, situées à des niveaux différents, pour permettre, lors de la prise en charge de la tige (3) par le crochet (36), un précintrage de ladite tige dans le sens de la formation de l'arceau.

**6.-** Magasin de tiges rectilignes (3) pour dispositif d'implantation automatique d'arceaux dans le sol en vue de la formation de tunnels de culture, du type comprenant une zone de stockage des tiges (3) en vrac ou en paquets et une zone en forme de goulotte (21) pour la distribution des tiges à l'unité, caractérisé en ce qu'il comporte, séparant les deux zones, des moyens automatiques (50) d'extraction desdites tiges une à une de la zone de réception, pour les disposer dans la goulotte de distribution (21), lesquels moyens se situent sensiblement au centre du magasin pour saisir les tiges (3) en leur milieu.

**7.-** Magasin selon la revendication 6, caractérisé en ce que les moyens d'extraction sont constitués d'un secteur circulaire (51) dont la bordure périphérique (58) supporte les tiges (3) stockées dans la zone de réception, laquelle bordure (58) comporte un cran (59) permettant l'accueil d'une tige (3) par gravité, lequel secteur est animé d'un mouvement de va et vient entre la zone de réception où il prend en charge une tige (3) et la goulotte (21) où il est déchargé de ladite tige au moyen d'un système d'éjection ; la distance séparant la zone de réception et la zone où s'effectue l'éjection de la tige (3) étant suffisante pour permettre à ladite tige de s'extraire du paquet de tiges situé dans ladite zone de réception par simple élasticité.

**8.-** Magasin selon la revendication 7, caractérisé en ce que le système d'éjection des tiges (3) est constitué de lames de ressort (63) disposées de part et d'autre du secteur circulaire (51) de façon à propulser la tige (3) hors du cran (59) dès que ce dernier pénètre dans la zone (56) située au-dessus de la goulotte (21).

**9.-** Magasin selon la revendication 7, caractérisé en ce qu'il comporte, sur la bordure périphérique (58) du secteur (51), un léger crénelage (64) qui s'étend de part et d'autre du cran (59) pour réaliser un secouage des tiges (9) lors du mouvement de va et vient dudit secteur.

**10.-** Magasin selon la revendication 7, caractérisé en ce que le paquet de tiges (3) disposé dans le magasin (11), en appui sur le secteur (51), est maintenu sensiblement à l'horizontale au moyen de deux pattes (23) escamotables qui prennent appui sur les extrémités supérieures dudit paquet.

**11.-** Machine pour la formation de tunnels de culture, caractérisée en ce qu'elle comporte un dispositif d'implantation d'arceaux selon l'une quelconque des revendications 1 à 5, et au moins un des éléments suivants :

– un rouleau (15) de matériau (4) avec ses moyens de mise en forme permettant de recouvrir les arceaux (3) préalablement plantés, lesquels moyens sont constitués d'un guide (16) en forme d'arceau disposé dans un plan horizontal, de roues latérales servant à maintenir les bordures latérales du matériau (4) pressées sur le sol avant leur recouvrement par de la terre au moyen de socs (18) ;

– d'un rouleau (7) disposé en amont du dispositif d'implantation des arceaux, lequel rouleau est constitué d'un film plastique (2) servant de paillage déroulé au sol au moyen de roues (8) ;

– d'un ensemble (9) de plantation de plants (1) ; laquelle machine comporte également une roue (6) servant à contrôler l'avance et déclencher à travers un automate, les différentes séquences servant à la plantation des arceaux notamment.

**12.-** Tunnel de culture obtenu au moyen de la machine selon la revendication 11, caractérisé en ce qu'il comporte :

– un paillage étendu sur le sol, recevant les plants (1) dans sa partie centrale ;

– des arceaux (3) plantés en voisinage des bordures du paillage, à travers ce dernier ;

– un film plastique ou filet (4) mis en forme par les arceaux (3) et maintenu en place au moyen de ses bordures, lesquelles bordures reposent directement sur les bordures du paillage et sont recouvertes de terre.

EP 0 465 327 A2

_fig. 2_

_fig. 1_

fig.4

fig.3

_fig.5_

_fig.6_

EP 0 465 327 A2

_fig.7_